Europäisches Patentamt

European Patent Office

Office européen des brevets

(11) Publication number: **0 312 367 B1**

# EUROPEAN PATENT SPECIFICATION

(45) Date of publication of patent specification: **28.07.93**

(51) Int. Cl.⁵: **B05D 7/02**, C08J 3/00, C08L 27/06

(21) Application number: **88309617.4**

(22) Date of filing: **13.10.88**

(54) **Powder moulding resin.**

(30) Priority: **13.10.87 JP 258074/87**
**21.06.88 JP 152738/88**

(43) Date of publication of application:
**19.04.89 Bulletin 89/16**

(45) Publication of the grant of the patent:
**28.07.93 Bulletin 93/30**

(84) Designated Contracting States:
**DE FR GB IT**

(56) References cited:
**GB-A- 838 239**
**US-A- 4 097 558**

(73) Proprietor: **Chisso Corporation**
**6-32, Nakanoshima 3-chome Kita-ku**
**Osaka-shi Osaka-fu(JP)**

(72) Inventor: **Ando, Masaru**
**17, Tatsumidai-higashi 2-chome**
**Ichihara-shi Chiba-ken(JP)**
Inventor: **Uemura, Katsuoki**
**91-16, Iwasaki**
**Ichihara-shi Chiba-ken(JP)**

(74) Representative: **Lamb, John Baxter et al**
**MARKS & CLERK 57-60 Lincoln's Inn Fields**
**London WC2A 3LS (GB)**

## Description

This invention relates to a process for the production of a resin for powder moulding (a "powder moulding resin"). More particularly the invention relates to process for producing a powder moulding resin by coating the surface of a powdered vinyl chloride resin composition (hereinafter simply referred to as as a "vinyl chloride composition") with a high-molecular weight film component. Such a powder moulding has improved powder flowability and as a result it is possible to faithfully duplicate the patterns even of complicated moulds having fine projections and/or depressions and to produce moulded products having no pinholes and having a uniform thickness.

Powder moulding resins may be processed by various moulding and coating processes such as rotational moulding, slush moulding fluidized bed dip coating electrostatic coating, etc. Of these, slush moulding, wherein powder feed and baking are carried out inside a mould and the resulting moulded product is then removed, is a superior moulding process. Thus, using slush moulding leather grain patterns are faithfully duplicated; the resulting product has a superior appearance; a moulded product having a complicated deep drawn shape may be obtained; there is a degree of freedom for new designs; the product has a soft feeling and hence a high-quality feeling, unlike plastics, is exhibited. Thus the product meets requirements for high-quality products. Further, slush moulding is also superior as regards handling, thickness uniformity and making thin-gauge products Moreover, slush moulding makes it possible to effect colour blend moulding and reuse. Slush-moulded products have been used as interior components for automobiles such as door trims, crush pads, console boxes, etc.

Powder moulding resins include vinyl chloride compositions. However, in the case of the compositions as they are, since liquid additives such as plasticizers, bleed, powder flowability may be such as to make powder moulding difficult.

In order to improve powder flowability, it has been proposed to add a small quantity of finely powdered vinyl chloride resin to the surface of vinyl chloride compositions to reduce the adhesive properties of the compositions and thereby improve powder flowability (See Japanese laid-open patent applications Nos. Sho 56-13651/1981, Sho 59-66440/1984, Sho 59-155434/1984 and Sho 59/161456/1984).

It has also been proposed to increase the particle diameter of vinyl chloride compositions to thereby improve the powder flowability and hence it has been proposed to make the vinyl chloride resins porous and to contain a liquid additive, such as a plasticizer, in the pores.

Powder moulding resins should have good powder flowability and, at the same time, good melt characteristics. However, powder flowability and melt characeristics are often in conflict. The melt characteristic is often determined by the polymerization degree of the polymer and the quantity of plasticizers. If the quantity of plasticizer is reduced, melt-processing of vinyl chloride resin copositions is difficult and decomposition may occur. If the processing temperature is reduced in order to prevent such decomposition, the resulting product has inferior physical properties. If, on the other hand the amount of plasticizer is increased, the plasticizer bleeds notably onto the surface of the powder composition to impair the powder flowability. Thus the amount of plasticizer used has so far been limited.

A cause of reduction of powder flowability is plasticizer bleeding and, to prevent this bleeding, it has been proposed to coat the powder surface of the resin compositions with a small quantity of a fine powder. As such fine powder, a high molecular weight vinyl chloride emulsion polymer is often used, but it is impossible to completely prevent the plasticizer bleeding. Further, if the powder moulding resins are stored for a long time or at an elevated temperature, plasticizers bleed from the resins to reduce the flowability of the resins so that it is difficult to stock the resins. Further, if a large amount of fine powder separates the powder moulding, resin in this powder is liable to be charged and such charging hinders the flowability of the resin for powder moulding.

It is an object of the present invention to provide a process for the production of a powder moulding resin having improved flowability; capable of faithfully duplicating the patterns even of complicated moulds having fine projections and depressions; capable of giving a moulded product having a uniform thickness and no pinholes; and having a good stability even in the case of long term storage.

The invention provides a process for producing a powder moulding resin which comprises a process for producing a powder moulding resin which comprises feeding a powdered vinyl chloride resin composition composed of a vinyl chloride resin obtained by bulk or suspension polymerization and a plasticizer, into an agitation vessel provided with spraying means; spraying a film-forming liquid comprising a film-forming polymer and a carrier medium onto the surface of the powdered resin composition by means of the spraying means, while agitating the powdered resin composition; followed by removing the carrier medium to form a film of the film-forming polymer on the powdered vinyl chloride resin composition.

The film-forming liquid used in the process of the invention is suitably a solution of the film-forming polymer in an appropriate medium or a dispersion of the polymer in an appropriate medium. Dispersions may be used as well as solutions since even in the case of so-called "water-paints", a film is also formed, and it is impossible to distinguish dispersion from dissolution.

The vinyl chloride composition (vinyl chloride resin composition) used in the present invention is a powdered composition containing a plasticizer and other possible additives such as stabilizers, etc. added to vinyl chloride resin, and may suitably have an average possible size in the range, for example, 100 to 200 $\mu$m.

The vinyl chloride resin may be a homopolymer of vinyl chloride or a copolymer of vinyl chloride with one or more monomers copolymerizable therewith. In order to enlarge the particle diameter of the resin and also to make it porous to thereby improve the absorption of plasticizers, polymers produced by suspension polymerization process or a bulk polymerization process are employed. Examples of suitable monomers copolymerizable with vinyl chloride monomer include ethylene; propylene; butene; pentene-1; butadiene; vinyl or alkyl esters of carboxylic acids such as acetic acid, caproic acid, caprylic acid, benzoic acid, etc.; dialkyl maleates or fumarates the alkyl group of which has 1 to 12 carbon atoms; acrylonitrile; vinylidene chloride; vinylidene cyanide; alkyl vinyl esters, the alkyl group of which has 1 to 16 carbon atoms; N-vinyl pyrrolidone; vinylpyridine; vinylsilane; alkyl acrylates or alkyl methacrylates, the alkyl group of which has 1 to 16 carbon atoms, etc. At least one of these comonomers may be copolymerized in a proportion of 40 parts by weight or less, preferably 30 parts by weight, per 100 parts by weight of vinyl chloride.

Examples of plasticizers which may be used in the vinyl chloride resin are dialkyl phthalates, dialkyl adipates, trialkyltrimellitates, dialkyl sebacates, dialkyl azelates, alkyl benzyl phthalates, trialkyl phosphates, alkyl aryl phosphates, the alkyl groups of which esters have 4 to 13 carbon atoms. Polyester plasticizers may also be used. Specific examples of plasticizers are di-n-butyl phthalate, di-n-octyl phthalate, di-2-ethylhexyl phthalate (DOP), diisooctyl phthalate, octyl decyl phthalate, diisodecyl phthalate, butyl benzyl phthalate, di-2-ethylhexyl isophthalate, di-2-ethylhexyl adipate (DOA), di-n-decyl adipate, diisodecyl adipate, tri-2-ethylhexyl trimellitate, 2-ethylhexyl azelate, dibutyl sebacate, di-2-ethylhexyl sebacate, tributyl phosphate, tri-2-ethylhexyl phosphate, 2-ethylhexyl diphenyl phosphate, tricresyl phosphate, triheptyl trimellitate, trinonyl trimellitate, triundecyl trimellitate, etc. These may be used without any particular limitation as far as they are used for vinyl chloride resins. Further, two or more plasticizers can be used in admixture.

Further, other additives such as stabilizers, colouring agents, lubricants, fillers, secondary plasticizers, etc. can be added to the vinyl chloride compositions within the range in which they have no unwanted influence upon the compositions.

The film-forming polymer forms a coating on the particle surface of the vinyl chloride composition and hence should have little adhesion to itself. Thus it is suitably a high polymer material.

Examples of high polymer materials for use in the film-forming component are cellulosic compounds such as viscose, methyl cellulose, hydroxyethyl cellulose, cellulose acetate, cellulose acetate phthalate, etc.; starches such as soluble starch, carboxymethylated starch, corn starch, etc.; proteins such as hide glue, gelatin, casein, etc; mucilages obtained from microorganisms such as dextran, levan, etc.; plant mucilages such as gum tragacanth, gum acacia, etc.; marine algae such as galactan, sodium alginate, etc.; vinyl polymers such as polyvinyl alcohol, polyvinylidene chloride, polyvinyl acetate, polyvinyl ether, etc.; thermoplastic resins, such as polyethylene oxide, polyethylene, acrylic resins, silicones, polyesters, polyamides, etc.; and natural or synthetic rubbers such as SBR, butyl rubber, polychloroprene, NBR, polysulphide, reclaimed rubber, etc. Among these, those which have been very often used as adhesives and have no sticky properties are preferred, and further, cellulosic compounds, vinyl chloride/vinyl acetate copolymers and acrylic resins are particularly preferred. The film-forming component, also, can contain additives such as stabilizers, colouring agents, lubricants, fillers, platicizers, etc. within a range in which they have no bad effect upon the powder moulding.

The high polymer film component may be present in a quantity at which more than half of the surface of the vinyl chloride composition is coated. The quantity is not a quantity in which it has been confirmed whether the powdery vinyl chloride composition has been coated uniformly and completely without any uncoated surface. However, the quantity of the high polymer film-forming component, based on 100 parts by weight of the vinyl chloride composition, is preferably from 0.1 to 30 parts by weight, as calculated in terms of solids, most preferably from 0.1 to 30 parts by weight, as calculated in terms of solids, most preferably from 0.5 to 10 parts by weight.

Fine powders which can be additionally used in the present invention may be inorganic materials having a small particle diameter or organic materials containing a high polymer substance. This fine powder is preferably a powdered vinyl chloride composition having an average particle diameter of from 0.001 to 20 $\mu$m, since it is possible to obtain a resin for powder moulding having a superior flowability. If a powder

larger than 20 $\mu$m is used, its adhesion onto the surface of the powder moulding resin having a film formed thereon is inferior and hence loss of powder occurs. As to the powdered vinyl chloride resin having fine powder thereon, if the resin powder is in the form of a sphere having no pore therein and a smooth surface, the sticking of the film component to the resin surface used together may be reduced. Thus, a vinyl chloride resin for paste processing having a polymerization degree of 700 to 2,000 according to emulsion polymerization process is very often used. This vinyl chloride resin for paste processing, too, is a vinyl chloride homopolymer or a copolymer of vinyl chloride with a monomer copolymerizable therewith. Examples of the monomer copolymerizable with the vinyl chloride are ethylene, propylene, butene, pentene-1, butadiene, styrene, $\alpha$-methylstyrene, vinyl esters or allyl esters of acetic acid, caproic acid, caprylic acid, benzoic acid, etc., dialkyl maleates or fumarates the alkyl group of which has 1 to 12 carbon atoms, acrylonitrile, vinylidene chloride, vinylidene cyanide, alkyl vinyl ethers the alkyl group of which has 1 to 16 carbon atoms, N-vinylpyrrolidone, vinylpyridine, vinylsilanes, alkyl acrylates or methacrylates the alkyl group of which has 1 to 16 carbon atoms, etc. At least one of these may by copolymerized with vinyl chloride in the range of 40 parts by weight or less, preferably 30 parts by weight or less based on 100 parts by weight of vinyl chloride.

If the high polymer in the dispersion of the present invention has an average particle diameter of 20 $\mu$m or less, the appearance of the resulting product is not adversely effected; hence such diameter is preferred.

The carrier medium for the film-forming liquid used in the process of the invention serves to provide a solution or dispersion, but the forms cannot be strictly distinguished from each other. Examples of suitable media are ketones such as acetone, methyl ethyl ketone, etc.; alcohols such as methyl alcohol, ethyl alcohol, etc.; ethers such as methyl ether, ethyl ether, etc; hydrocarbons such as pentane, hexane, mineral spirits, toluene, xylene, etc.; esters such as methyl acetate, ethyl acetate, etc.; cellosolves; water, etc. Two or more of these may be used in admixture. As the medium used in the form of solution or dispersion, those very often used in adhesives are preferred.

As to the process for forming the coating, when the film-forming liquid is adhered onto the powder of the vinyl chloride resin composition while the composition is stirred in a stirring vessel, a uniform coating is obtained. After the film-forming liquid has been adhered to the powdered vinyl chloride composition, the carrier medium is removed (dried) to form the film.

Examples of suitable film-coating means are a centrifugal fluidized type coating granulation device provided with spraying means and a coating device provided with a spraying means in a simple stirring vessel. Examples of the device provided with a spraying means are Spiral Flow (trademark), spray dryer and High Speed Mixer (trademark). Further, generally used coating devices provided with a spraying means in a simple stirring vessel such as a Henschel mixer (trademark), ribbon blender, etc. may also be sufficient.

The coating velocity when spray coating is preferably from 1 to 500 m$\ell$/min, per 1 Kg of the vinyl chloride composition, but the velocity is not always limited to such range.

The number of spraying means used in the process of the invention has no particular limitation, and the site at which the means is located also has no particular limitation. However, in order to efficiently form a uniform coating on the particle surfaces of the vinyl chloride composition, it is preferred to spray the liquid from the upper part corresponding to just the center between the central part and the lateral surface of the coating device toward just below the above upper part or somewhat toward the side of the lateral surface, so as to make the contact area of the spray with the vinyl chloride composition as large as possible. In addition, as to the process for spraying the high polymer film component, one kind thereof may be sprayed to coat the powdery vinyl chloride composition with a single film or two kinds or more thereof may be simultaneously or alternately sprayed to form a multiple film on the powdery vinyl chloride composition.

As to the process for coating the composition with fine powder which may be employed in the present invention, the composition may be coated first with a high polymer film component and thereafter with a fine powder, or it may be coated first with a fine powder and thereafter with a high polymer film component, or formation of a high polymer film component and coating with fine powder may be simultaneously carried out.

As to the resin for powder forming of the present invention, since the surface of the powdery vinyl chloride composition containing a plasticizer is coated with a high polymer film component, a resin having a superior powder flowability is obtained.

The resin for powder molding of the present invention has a superior powder flowability; hence even when a mold having a complicated shape and fine projection and depression parts is employed, the resin fills into details and patterns of the mold are faithly duplicated to make it possible to obtain a molded product having no pinhole and a uniform thickness.

Since the resin for powder molding of the present invention is coated with a high polymer film component, it is possible to completely stop bleeding of a plasticizer from the inside of the composition particles; hence no quality deterioration occurs even during a long term storage and also no blocking occurs even when the composition is under load.

The resin for powder molding coated with the film component of the present invention and further with fine powder is coated with a high polymer film component and further has fine powder adhered thereonto; hence it is possible to reduce the sticky properties of the film component so that the powder flowability is more improved.

The resin for powder molding of the present invention is coated with a high polymer film component; hence even when the vinyl chloride composition constituting the core of the resin is reduced in the particle size, the powder flowability is not reduced even when a mold having a complicated and fine shape is employed, it is possible to sufficiently duplicate the patterns of the mold.

As to the resin for powder molding of the present invention, by optionally choosing the kind of the high polymer film component, it is possible to enhance the function of the resin such as antistatic properties, electrical conductivity, mold release characteristics, etc.

Since the resin for powder molding of the present invention is coated with a high polymer film component, no bleeding occurs and the powder flowability is not deteriorated even when the quantity of plasticizers used is increased.

Further, even in the case of the fluidized dip coating wherein a fluidized bed is formed by air blowing, the powder flowability is much improved, and even in the case of the electrostatic coating process, the resin has a superior flowability; thus the resin is applicable to various powder molding processes and coating processes.

As to the production process of the resin for powder molding of the present invention wherein the surface of the powdery vinyl chloride resin composition is coated with a liquid for film comprising a film component and a medium, followed by removing the medium to form a film, since desired functional characteristics can be afforded to the resin according to such an easy process, the use applications of the process is broad and its commercial utilization value is very great.

The present invention will be described in more detail by way of Examples and Comparative examples.

In addition, in order to evaluate whether the resin for powdery molding is suitable to slush molding process, the coating uniformity and mold release characteristics of the resin according to a molding process similar to the slush molding process were examined and the evaluation methods were carried out as follow:

1) Measurement of angle of repose:

A resin for powder molding was dropped through a funnel for bulk density measurement provided with a damper (according to JIS-K-6721), followed by filling the resin in an open cylindrical tube of 55 mm in diameter and 50 mm high, positioned just below the funnel, and thereafter rapidly and vertically holding up the cylindrical tube. As a result, the resin for powder molding resin collapses to form a mountain. The angle of repose of the mountain was measured.

2) Measurement of dropping velocity:

A resin for powder molding (120 mℓ) was fed into a funnel for bulk density measurement provided with a damper (according to JIS-K-6721), followed by measuring the time in which the total quantity of the resin has dropped and calculating the velocity from the time in terms of 100 mℓ.

3) Measurement of bulk density:

Measured according to JIS-K-6721.

4) Coating uniformity of molded product:

An iron plate (50 × 100 × 3.2 mm) having the surface subjected to plating treatment was preheated for 10 minutes in an oven heated to 230°C, followed by rapidly taking out the plate, scattering a resin for powder molding (about 300 g) on the plate, allowing it to stand still for 5 seconds to effect baking, thereafter pulling up the plate at one end thereof by means of a wire, sweeping off non-melted, excess resin for powder molding, rapidly returning the plate into the oven, further heating it for 2 minutes, to completely melt the resin for powder molding on the iron plate and form a resin film on the iron plate and peeling off the resin film to make it a sample. The thicknesses of the respective samples thus obtained were subjected to six points measurement to obtain average values and deviation values. The evaluation was classified into the following four stages in terms of a ratio of deviation value to average value:

◎: less than $8 \times 10^{-2}$ mm$^{-1}$

○: $8 \times 10^{-2}$ to $15 \times 10^{-2}$ mm$^{-1}$

Δ: more than 15 to $25 \times 10^{-2}$ mm$^{-1}$

×: more than $25 \times 10^{-2}$ mm$^{-2}$

5) Mold-duplicating properties:

A mold of a flat plate (250 × 250 × 9 mm) wherein four grooves of 20 mm wide and 7 mm deep, 15 mm wide and 7 mm deep, 10 mm wide and 7 mm deep and 5 mm wide and 7 mm deep were cut on the surface of the plate; followed by applying a complicated, leather grain pattern onto the surface and further subjecting the resulting plate to plating treatment, had a resin for powder molding (about 700 g) baked thereon in the same manner as in the above evaluation 4), to have a resin film molded thereon. What a faithful extent the resin film could duplicate the design of the mold to was visually observed and the results were evaluated by classifying them into the following four stages:

◎: good, ○: somewhat good, Δ: somewhat inferior, and ×: inferior.

6) Antistatic properties:

A resin for powder molding (20 g) was sealed in a polyethylene bag of 50 × 100 mm, followed by vigorously shaking it. As a result, a substance which is readily charged or a strongly sticky substance sticks in the form of particles onto the inner wall surface of the polyethylene bag. The state was visually observed and evaluated by classifying it into the following four stages: ◎: good, ○: somewhat good, Δ: somewhat inferior, and ×: far inferior.

7) Mechanical strength:

The resin film obtained in the above item 4) was measured according to the method of JIS-K-6723.

8) Elongation:

The resin film obtained in the above item 4) was measured according to the method of JIS-K-6723.

9) Percentage floating-up:

A resin for powder molding (800 g) is placed in a cylindrical vessel of 100 mm in the inner diameter and 270 mm high having a bottom of a porous plate, and the height of the resin at that time is referred to as "a" Thereafter, air at a rate of 0.82 m$^3$/min is sent through the porous plate of the bottom to form a fluidized state, and the height of the resin at that time is referred to as "b". The percentage floating-up was sought from the following ratio: (b-a) × 100/a.

10) Fluidized state:

The fluidized state at the time when the percentage floating up was sought was visually evaluated.

◎: very uniform fluidized state

○: uniform fluidized state

Δ: somewhat non-uniform fluidized state

×: non-uniform fluidized state

11) Measurements of angle of repose and flowing-down velocity after one month:

A resin for powder molding (1 Kg) after its production was sealed in a polyethylene bag of 300 × 500 mm, followed by placing a resin bag (25 Kg) on the polyethylene bag and allowing them to stand for one month in a warehouse in which the temperature rose to 20°C to 60°C at the highest. The resulting angle of repose after they were allowed to stand was measured in the same manner as in the above item 1) and the flowing-down velocity similarly after one month was measured in the same manner as in the above item 2).

6

Examples 1 - 4

A vinyl chloride resin having an average polymerization degree of 800 (vinyl chloride homopolymer, a product of suspension polymerization) (100 parts by weight), a Ba-Zn stabilizer (5 parts by weight), an epoxidized soybean oil (5 parts by weight), a mixed phthalate of alkyls of 9, 10 and 11 carbon atoms (75 parts by weight) and a pigment-black (2 parts by weight) were fed into a 20 ℓ capacity Henschel mixer (trademark) manufactured by Mitsuimiike Company, followed by mixing these on heating at 120°C for 20 minutes, thereafter rapidly cooling the mixture to obtain a powdery vinyl chloride resin composition having a particle diameter around 120 to 180 μm (5 Kg). Thereafter, liquids for film listed in Table 1 (solutions of hydroxypropyl cellulose containing 53.3 to 77.5% of hydroxypropoxy group (made by Nippon Soda Company) dissolved in ethanol) (each 500 mℓ) were each sprayed onto the vinyl chloride composition (1 Kg) through an automatic spray gun (AT-2 type, tradename of a machine manufactured by Froint Sangyo Company) provided at the upper part of a Henschel mixer (tradename) maintained at 40°C and 1,000 rpm. At that time, spraying was carried out at a rate of 25 mℓ/min based on 1 Kg of the vinyl chloride composition for 20 minutes, followed by carrying out agitation for 15 minutes under the same temperature condition to volatize off ethanol as a component of the liquid for film to thereby produce a resin for powder molding wherein the particle surface of the vinyl chloride composition was coated with a film of hydroxypropyl cellulose as a component of the liquid for film. The calculated value of the film quantity at that time is shown in Table 1.

The characteristics of the thus produced resins for film molding when subjected to powder molding, the characteristics of the resulting molded products and the characteristics of the products after allowed to stand for one month are together shown in Table 1. These molded products had no pinhole.

Example 5 - 7

While the powdery vinyl chloride composition obtained in Example 1 was agitated in a Henschel mixer (tradename) kept at 50°C, a liquid for film shown in Table 2 (an aqueous dispersion of a self-crosslinking type acrylic resin (Plexytol B-500, trademark of product made by Rohm & Haas Company, West Germany)) was sprayed onto the vinyl chloride composition particles in a proportion of 500 mℓ per Kg of the composition particles, through a spray means having a spray nozzle, provided at the upper part of the Henschel mixer. Spraying was carried out at a rate of 25 mℓ/min per Kg of the vinyl chloride composition for 20 minutes. Thereafter, agitation was carried out under the same temperature condition for 15 minutes to completely volatize off water as a component of the liquid for film and thereby obtain resins for film having the vinyl chloride composition coated with the film component on the particle surface of the composition (see Table 1).

The characteristics of these resins for powder modling, subjected to pwoder molding, the characteristics of the resulting molded products and the characteristics of the products after allowed to stand for one month are together shown in Table 1.

Comparative examples 1 and 2

Comparative example 1 refers to a product obtained by not coating the powdery vinyl chloride composition obtained under the conditions of Example 1.

Comparative example 2 refers to a resin for powder molding, obtained by adding 7.0 parts by weight of a vinyl chloride emulsion polymer of a fine powder having a particle diameter of 2 μm and a molecular weight of 1,100 to 100 parts by weight of a powdery vinyl chloride composition obtained under the conditions of Example 1, followed by agitating the mixture for 5 minutes in a Henschel mixer (tradename) kept at room temperature to coat the composition with the fine powder.

The characteristics of these resins for powder molding, subjected to powder molding, the characteristics of the resulting mold products and the characteristics of the products after allowed to stand for one month are together shown in Table 1. Further, the molded product of Comparative example 1 had 3 pinholes.

Example 8

While the powdery vinyl chloride composition obtained in Example 1 was agitated in a Henschel mixer (trademark) kept at 50°C, a solution of hydroxypropyl cellulose in ethanol indicated in Table 2 was sprayed onto the surface of the particles of the powdery composition obtained in Example 1 in a proportion of 500 mℓ per Kg of the powdery composition through a spraying means having a spray nozzle, provided at the

7

upper part of the Henschel mixer. The spraying was carried out for 20 minutes at a rate of 25 mℓ/min per Kg of the powdery composition, followed by carrying out agitation under the same temperature condition for 15 minutes and vaporizing off water as a component of the liquid for film to obtain a resin for powder forming, having a double layer of hydroxypropyl cellulose and an acrylic resin formed on the particle surface of the powdery vinyl chloride composition.

### Example 9

While the powdery composition obtained in Example 5 was agitated in a Henschel mixer (trademark) maintained at 40°C, a solution of hydroxypropyl cellulose dissolved in ethanol, indicated in Table 2, was sprayed onto the particle surface of the powdery composition obtained in Example 5 in a proportion of 500 mℓ per Kg of the powder composition obtained in Example 5, through a spray means having a spray nozzle, provided at the upper part of the Henschel mixer. Spraying was carried out for 20 minutes at a spraying velocity of 25 mℓ/min per Kg of the powdery composition obtained in Example 5, followed by carrying out agitation under the same temperature condition for 15 minutes and volatizing off ethanol as a component of the solution of hydroxypropyl cellulose dissolved in ethanol to obtain a resin for powder molding, having a double layer film of an acrylic resin and hydroxypropyl cellulose formed on the particle surface of the powdery vinyl chloride composition. The proportions of the powdery compositions obtained in Examples 8 and 9 are shown in Table 2. Further, the characteristics of the resins for powder molding, subjected to powder molding and the characteristics of the resulting molded products are together shown in Table 2.

### Example 10

While a powdery vinyl chloride composition obtained under the conditions of Example 1 was agitated in a Henschel mixer kept at 30° to 40°C, a liquid for film (a solution of an acrylic resin BR-85 for coating (tradename) made by Mitsubishi Rayon Company, dissolved in ethyl acetate indicated in Table 3, was sprayed in a proportion of 500 mℓ per Kg of the vinyl chloride composition through a spray means having a spray nozzle provided at the upper part of the Henschel mixer. Spraying was carried out for 20 minutes at a spray velocity of 25 mℓ/min per Kg of the vinyl chloride composition, followed by drying the resulting material at the same temperature condition for 15 minutes to vaporize off ethyl acetate as a component of the liquid for film to thereby obtain a resin for powder molding having the particle surface of the vinyl chloride resin coated with the acrylic resin for coating as a component of the liquid for film. The calculated value of the film quantity at that time is shown in Table 3.

The characteristics of the resin for powder molding subjected to powder molding, the characteristics of the resulting molded product and the characteristics of the product after allowed to stand for one month are together shown in Table 3.

### Example 11

While a powdery vinyl chloride composition obtained under the conditions of Example 1 was agitated by Spiral Flow (trademark of a coating means manufactured by Froint Sangyo Company) kept at 30° to 40°C and also floated by air blown up from the lower part of the vessel, a liquid for film (a solution of a coating acrylic resin BR-85 (tradename of product made by Mitsubishi Rayon Company) dissolved in ethyl acetate), indicated in Table 3, was sprayed in a proportion of 200 mℓ per Kg of the vinyl chloride composition through a spray means having a spray nozzle, provided inside the Spiral Flow. Spraying was carried out at a rate of 6.7 mℓ/min per Kg of the vinyl chloride resin for 30 minutes, followed by drying the resulting material under the same temperature condition for 5 minutes to volatize off ethyl acetate as a component of the liquid for film to thereby produce a resin for powder molding having the particle surface of the vinyl chloride composition with the coating acrylic resin as a component of the liquid for film. The calculated value of the film quantity at that time is shown in Table 3.

The characteristics of the resin for powder molding subjected to powder molding, the characteristic of the resulting molded product and the characteristic of the product after allowed to stand for one month are together shown in Table 3.

Example 12

While a powdery vinyl chloride composition obtained under the conditions as in Example 1 was agitated in a coating means Spiral Flow (trademark of a device manufactured by Froint Sangyo Company) maintained at 30° to 40°C and floated by air blown up from the lower part of the apparatus, a liquid for film (a solution of a vinyl chloride-vinyl acetate copolymer adhesive DB-101 (tradename of product made by Diabond Kogyo Company) dissolved in ethyl acetate), indicated in Table 3 was sprayed in a proportion of 100 mℓ per Kg of the vinyl chloride composition. Spraying was carried out at a rate of 6.7 mℓ/min per Kg of the vinyl chloride composition for 15 minutes, followed by drying the resulting material under the same temperature condition for 5 minutes to vaporize off ethyl acetate as a component of the liquid for film and thereby produce a resin for powder molding having the particle surface of the vinyl chloride composition coated with the vinyl chloride-vinyl acetate copolymer adhesive as a component of the liquid for film. The calculated value of the film quantity at that time is shown in Table 3.

The characteristics of the resin for powder molding subjected to power molding, the characteristics of the resulting molded product and the characteristics of the product after allowed to stand for one month are together shown in Table 3.

Example 13

While the powdery vinyl chloride composition obtained under the conditions as in Example 1 was agitated in a Henschel mixer kept at 50°C, a vinyl chloride emulsion polymer containing fine powder having a particle diameter of 2 μm and a molecular weight of 1,100 (30 g) was added to the vinyl chloride composition (1 Kg), followed by spraying a liquid for film (an aqueous dispersion of a self-crosslinking acrylic resin (Plexytol B-500, trademark of product made by Rohm & Haas Company, West Germany)) indicated in Table 2 in a proportion of 500 mℓ per Kg of the vinyl chloride composition, onto the particles of the vinyl chloride composition, through a spray means having a spray nozzle provided at the upper part of the Henschel mixer. Spraying was carried out at a rate of 25 mℓ/min per Kg of the vinyl chloride composition for 20 minutes, followed by agitating the resulting material under the same temperature condition for 5 minutes, thereafter adding a vinyl chloride emulsion polymer containing fine powder having a particle diameter of 2 μm and a molecular weight of 1,100 in a proportion of 40 g per Kg of the vinyl chloride composition, agitating the mixture under the same temperature condition for 10 minutes and completely vaporizing off water as a component of the liquid film to obtain a resin for powder molding having the particle surface of the vinyl chloride composition coated with the film component, shown in Table 4.

The characteristics of the resin for powder molding subjected to powder molding, the characteristics of the resulting molded product and the characteristics of the product after allowed to stand for one month are together shown in Table 4.

Table 1

| Sample | Concentration of liquid for film | Film quantity of resin for film (wt.part) | Evaluation item | | | | | | | | | | Evaluation item after allowed to stand for one month | |
|---|---|---|---|---|---|---|---|---|---|---|---|---|---|---|
| | | | Angle of repose (°) | Dropping speed (sec/100ml) | Bulk density (g/ml) | Uniformity of coating of molded product | Duplicability of mold | Anti-static properties | Mechanical strength (Kg/mm²) | Elongation (%) | Percentage floating-up (%) | Fluidized state | Angle of repose (°) | Dropping speed (sec/100ml) |
| Ex. 1 | H 10g/L | 0.5 | 34 | 15 | 0.596 | ◯ | ◯ | ◎ | 1.0 | 277 | 16.7 | ◎ | 34 | 15 |
| Ex. 2 | H 20g/L | 1.0 | 34 | 15 | 0.592 | ◯ | ◯ | ◎ | 0.9 | 282 | 17.4 | ◎ | 34 | 15 |
| Ex. 3 | H 60g/L | 3.0 | 34 | 15 | 0.591 | ◎ | ◎ | ◎ | 1.0 | 280 | 17.2 | ◎ | 33 | 15 |
| Ex. 4 | H 200g/L | 10.0 | 34 | 16 | 0.590 | △ | ◯ | ◎ | 0.9 | 285 | 16.3 | ◎ | 34 | 16 |
| Ex. 5 | A 1% | 0.5 | 34 | 15 | 0.573 | ◯ | ◯ | △ | 1.0 | 277 | 15.3 | ◎ | 34 | 15 |
| Ex. 6 | A 2% | 1.0 | 34 | 15 | 0.570 | △ | ◯ | △ | 1.0 | 273 | 17.0 | ◎ | 35 | 15 |
| Ex. 7 | A 4% | 2.0 | 35 | 16 | 0.566 | △ | ◯ | △ | 1.0 | 283 | 16.1 | ◎ | 35 | 15 |
| Comp. ex. 1 | | 0 | 43 | 32 | 0.468 | × | × | △ | 0.9 | 278 | 4.5 | × | 44 | 41 |
| Comp. ex. 2 | | (7.0) Emulsion polymer | 37 | 18 | 0.587 | △ | △ | △ | 1.0 | 289 | 11.9 | ◯ | 38 | 19 |

Note) Concentration of liquid for film "H" refers to quantity of hydroxypropyl cellulose dissolved in 1 ℓ of ethanol (g/ℓ).

Concentration of liquid for film "A" refers to quantity of self-crosslinking acrylic resin in aqueous solution (%).

Film quantity refers to quantity after dried, based on 100 wt. parts of vinyl chloride resin.

EP 0 312 367 B1

Table 2

| Sam-ple | Quantity of one film of resin for powder molding (wt.part) | Quantity of two films of resin for film (wt.part) | Evaluation item | | | | | | | | | | Evaluation item after al-lowed to stand for one month | |
|---|---|---|---|---|---|---|---|---|---|---|---|---|---|---|
| | | | Angle of repose (°) | Drop-ping speed (sec/100mℓ) | Bulk density (g/mℓ) | Uniform-ity of coating of molded product | Duplica-bility of mold | Anti-static proper-ties | Mechanical strength (Kg/mm$^2$) | Elonga-tion (%) | Percent-age floating-up (%) | Fluid-ized state | Angle of repose (°) | Dropping speed (sec/100mℓ) |
| Ex.8 | H 1.0 | A 0.5 | 34 | 14 | 0.582 | ○ | ◎ | ○ | 0.9 | 293 | 20.0 | ◎ | 34 | 13 |
| Ex.9 | A 0.5 | H 0.5 | 33 | 13 | 0.596 | ◎ | ◎ | ◎ | 1.0 | 281 | 21.1 | ◎ | 33 | 13 |

Note)   Quantity of one film:   "H" at first time refers to solution of hydroxypropyl
cellulose (10 g) in ethanol (1 ℓ);
"A" refers to quantity after dried, of 1% aqueous
solution of self-crosslinking acrylic resin per 100 wt.parts
of vinyl chloride composition.

Quantity of two films: quantity of second time film after drying of first time film.
"H" and "A" refer to solution of hydroxypropyl cellulose
and that of self-crosslinking acrylic resin, respectively,
the respective concentrations being same.

EP 0 312 367 B1

## Table 3

| Sam-ple | Concentration of liquid for film | Film quantity of resin for film (wt.part) | Evaluation item | | | | | | | | | | Evaluation item after allowed to stand for one month | |
|---|---|---|---|---|---|---|---|---|---|---|---|---|---|---|
| | | | Angle of repose (°) | Drop-ping speed (sec/100mℓ) | Bulk density (g/mℓ) | Uniform-ity of coating of molded product | Duplica-bility of mold | Anti-static proper-ties | Mechanical strength (Kg/mm$^2$) | Elonga-tion (%) | Percentage floating-up (%) | Fluid-ized state | Angle of repose (°) | Dropping speed (sec/100mℓ) |
| Ex.10 | M 40g/L | 2.0 | 34 | 13 | 0.594 | ◯ | ◎ | ◎ | 1.0 | 282 | 19.3 | ◎ | 34 | 14 |
| Ex.11 | M100g/L | 2.0 | 33 | 12 | 0.600 | ◎ | ◎ | ◎ | 1.0 | 268 | 20.8 | ◎ | 33 | 12 |
| Ex.12 | N200g/L | 2.0 | 34 | 14 | 0.606 | ◯ | ◯ | ◎ | 0.9 | 281 | 19.6 | ◎ | 34 | 14 |

Note)   Concentration of liquid for film:   "M" refers to quantity of coating acrylic resin dissolved in 1 ℓ of ethyl acetate (g/ℓ).

Concentration of liquid for film:   "N" refers to quantity of vinyl chloride-vinyl acetate copolymer adhesive dissolved in 1 ℓ of ethyl acetate (g/ℓ).

Film quantity:   Quantity after drying, based on 100 wt. parts of vinyl chloride composition.

Table 4

| Sample | Concentration of liquid for film | Film quantity of resin for film (wt.part) | Sticked quantity of resin for film (wt.part) | Angle of repose (°) | Dropping speed (sec/100mℓ) | Bulk density (g/mℓ) | Evaluation item | | | | | | | Evaluation item after allowed to stand for one month | |
| | | | | | | | Uniformity of coating of molded product | Duplicability of mold | Anti-static properties | Mechanical strength (Kg/mm²) | Elongation (%) | Percentage floating up (%) | Fluidized state | Angle of repose (°) | Dropping speed (sec/100mℓ) |
|---|---|---|---|---|---|---|---|---|---|---|---|---|---|---|---|
| Ex.13 | A 2% | 1.0 | 7.0 Emulsion polymer | 3 | 13 | 0.604 | ◎ | ◎ | ◎ | 1.01 | 277 | 21.6 | ◎ | 33 | 13 |

Note) Concentration of liquid for film: "A" refers to quantity of self-crosslinking acrylic resin dissolved in aqueous solution (%).

Film quantity: Quantity after drying, based on 100 wt. parts of vinyl chloride composition.

## Claims

1. A process for producing a powder moulding resin which comprises feeding a powdered vinyl chloride resin composition composed of a vinyl chloride resin obtained by bulk or suspension polymerization

13

and a plasticizer, into an agitation vessel provided with spraying means; spraying a film-forming liquid comprising a film-forming polymer and a carrier medium onto the surface of the powdered resin composition by means of the spraying means, while agitating the powdered resin composition; followed by removing the carrier medium to form a film of the film-forming polymer on the powdered vinyl chloride resin composition.

2. A process as claimed in claim 1 in which the film-forming liquid is a solution or dispersion of the film-forming polymer.

3. A process as claimed in claim 1 or claim 2 in which the polymer film component is present as a single layer or as two layers and is composed of a cellulosic compound, a vinyl chloride-vinyl acetate copolymer or an acrylic resin.

4. A process as claimed in any one of claims 1-3 in which the powdered vinyl chloride resin composition is coated with a finely powdered vinyl chloride resin having an average particle diameter of from 0.001 to 20 $\mu$m.

**Patentansprüche**

1. Verfahren zur Herstellung eines Kunstharzes zum Sinterformen, umfassend das Zuführen einer Zusammensetzung aus pulverförmigem Kunstharz aus Vinylchlorid, die ein durch Blockpolymerisation oder Suspensionspolymerisation erhaltenes Kunstharz aus Vinylchlorid und einen Weichmacher aufweist, in einen mit einer Vorrichtung zum Sprühen versehenen Rührwerksbehälter; das Aufsprühen einer ein filmbildendes Polymer und ein Trägermittel aufweisenden filmbildenden Flüssigkeit auf die Oberfläche des Kunstharzes der pulverförmigen Zusammensetzung mit Hilfe der Vorrichtung zum Sprühen, während die pulverförmige Zusammensetzung aus Kunstharz gerührt wird; gefolgt von dem Entfernen des Trägermittels, um aus dem filmbildenden Polymer auf dem Kunstharz der pulverförmigen Zusammensetzung aus Vinylchlorid einen Film zu bilden.

2. Verfahren nach Anspruch 1, bei welchem die filmbildende Flüssigkeit eine Lösung oder Dispersion des filmbildenden Polymers ist.

3. Verfahren nach Anspruch 1 oder 2, bei welchem die Komponente des Polymerfilms als eine einzelne Schicht oder in Form von zwei Schichten vorliegt und eine Verbindung eines Cellulosederivats, ein Copolymer aus einem Vinylchlorid und Vinylacetat oder ein Acrylharz aufweist.

4. Verfahren nach einem der Ansprüche 1 bis 3, bei welchem die Zusammensetzung des pulverförmigen Kunstharzes aus Vinylchlorid mit einem fein pulverisierten Kunstharz aus Vinylchlorid beschichtet wird, das einen mittleren Teilchendurchmesser von 0,001 bis 20 $\mu$m aufweist.

**Revendications**

1. Procédé de production de résine pour le moulage de poudres qui comprend l'introduction d'une composition de résine de chlorure de vinyle sous forme de poudre composée d'une résine de chlorure de vinyle obtenue par polymérisation en bloc ou en suspension et d'un plastifiant dans une cuve à agitation équipée d'un dispositif de pulvérisation, la pulvérisation d'un liquide filmogène comprenant un polymère filmogène et un milieu constituant un véhicule sur la surface de la composition de résine en poudre à l'aide du dispositif de pulvérisation, tout en maintenant sous agitation la composition de résine sous forme de poudre; l'enlèvement subséquent du milieu constituant le véhicule pour former un film de polymère sur la composition de résine de chlorure de vinyle sous forme de poudre.

2. Procédé tel que revendiqué dans la revendication 1, dans lequel le liquide formant le film est une solution ou une dispersion du polymère formant un film.

3. Procédé tel que revendiqué dans la revendication 1 ou dans la revendication 2, dans lequel le composant film de polymère est présent sous la forme d'une seule couche ou de deux couches et est composé d'un composé cellulosique, d'un copolymère chlorure de vinyle-acétate de vinyle ou d'une résine acrylique.

4.  Procédé tel que revendiqué dans l'une quelconque des revendications 1 à 3, dans lequel la composition de résine de chlorure de vinyle sous forme de poudre est recouverte d'une résine de chlorure de vinyle sous forme de poudre fine ayant un diamètre particulaire moyen allant de 0.001 à 20 $\mu$m.